# EUROPÄISCHE PATENTANMELDUNG

(11) **EP 1 734 013 A2**
(43) Veröffentlichungstag der Anmeldung: **20.12.2006**
(21) Anmeldenummer: 06115203.9
(22) Anmeldetag: 09.06.2006
(51) Int. Cl.: C02F 9/04, C02F 9/00, C02F 1/52, C02F 1/44, C02F 1/66, C02F 103/32

(54) **Verfahren zur Behandlung von Abwasser aus der Olivenproduktion**

(30) Priorität: 10.06.2005 AT 9872005
(71) Anmelder: Adler, Herwig, 3433 Königstetten (AT)
(72) Erfinder: Adler, Herwig, 3433 Königstetten (AT)
(74) Vertreter: Henhapel, Bernhard

(57) **Zusammenfassung**

Verfahren zur Behandlung von Abwasser (A) aus Betrieben zur Olivenölproduktion, das neben feststofflichen Abfällen (9) im Zuge der Olivenverarbeitung anfällt, wobei erfindungsgemäß vorgesehen ist, dass das Abwasser (A) in einem ersten Schritt durch eine Flockung vorgereinigt wird, und das vorgereinigte Abwasser (VA) in einem weiteren Schritt durch Filterung endgereinigt wird. Die Flockung erfolgt dabei vorzugsweise durch Beimengung von Kalziumhydroxid als Flockungsmittel. Die Filterung erfolgt vorzugsweise durch eine Abfolge aus Nanofiltrationselementen (7) und Umkehrosmoseelementen (8).

## Beschreibung

Die Erfindung betrifft ein Verfahren sowie eine Vorrichtung zur Behandlung von Abwasser aus Betrieben zur Olivenölproduktion, das neben feststofflichen Abfällen im Zuge der Olivenverarbeitung anfällt.

Es werden im Wesentlichen 3 Verfahren zur Olivenölproduktion angewendet, und zwar der "traditionelle" Prozess mittels Pressen, der "industrielle" Prozess unter Verwendung eines 2-Phasen-Dekanter, oder unter Verwendung eines 3-Phasen-Dekanter.

Die letzten beiden Verfahren stellen kontinuierliche Prozesse dar. Bei der Produktion von Öl mittels 2-Phasen-Dekanter werden nur Öl und eine Feststoffpaste abgetrennt. Bei der Produktion von Öl mittels 3-Phasen-Dekanter entstehen als Nebenprodukte eine feste Phase und Abwasser. Beim 2-Phasen-Verfahren wird zwar weniger Wasser benötigt, doch die Feststoffpaste (ca. 800 kg pro 1.000 kg Oliven), welche Feststoffe und Wasseranteil vereint, ist schwierig zu handhaben, trocknet nur sehr langsam und ist daher problematisch zu entsorgen.

Daher wird gegenwärtig in den Intensivanbaugebieten vorwiegend das 3-Phasen-Verfahren eingesetzt: aus 1.000 kg Oliven resultieren etwa 200 kg Öl, 350 bis 500 kg Feststoff und ca. 1.000 bis 1.200 kg Abwasser. Insgesamt ergibt die Bilanz, dass alleine in der europäischen Olivenölindustrie mehr als 8,000.000 m³ Frischwasser pro Saison verbraucht werden, und 4,600.000 m³ Abwasser bzw. 6,800.000 Tonnen fester Abfall entstehen.

Abwasser aus der Olivenölproduktion (OMWW - olive mill waste water) ist daher zunehmend zu einem Problem in den Erzeugerländern geworden, die insbesondere im Mittelmeerraum gelegen sind. Es enthält hohe Konzentrationen an organischem Material, sowie verschiedene anorganische Verbindungen und darf daher nicht unbehandelt in die Umwelt gelangen.

Bisher wurde es dennoch - in Ermangelung technischer und ökonomisch sinnvoller Verfahren - oft nahe den Produktionsstandorten in offenen Lagunen gelagert, was zu enormen Problemen führte. Durch biologischen Abbau der organischen Inhaltsstoffe entstand eine dunkel gefärbte, intensiv riechende Schlamm/Wasser-Mischung, welche sowohl das Grundwasser beeinflusste, als auch in der weiteren Umgebung zu massiver Geruchsbelästigung führte. Zudem erforderte die Speicherung des saisonal von November bis März anfallenden Abwassers große und damit teure Deponievolumina. Ferner wurde das Problem damit nicht gelöst, sondern nur zeitlich aufgeschoben. Außerdem ist absehbar, dass sich aufgrund strengerer Umweltschutzbestimmungen die Abwasserproblematik in den Erzeugerländern in Zukunft verschärfen wird.

Zur Illustration des Abwasserproblems seien die Produktionsdaten für Olivenöl zitiert: gemäß FAO (Food and Agriculture Organization of the United Nations) betrug die weltweite Olivenölproduktion in der Saison 2003/2004 2,766.773 Tonnen, wovon 89 % oder 2,462.428 Tonnen auf Staaten der Europäischen Union, den EU-Kandidatenländern, sowie die Türkei entfallen. Damit ist der Olivenanbau in dieser Region auch ein bedeutender Wirtschaftsfaktor, welcher ein Jahreswachstum von 4 % aufweist, bei einer derzeitigen Gesamternte von 12 Millionen Tonnen Oliven auf mehr als 4,000.000 Hektar Anbaufläche. In der EU ist die Olivenölindustrie somit ein bedeutender Industriesektor mit rund 800.000 Beschäftigten. Eine Lösung der Abwasserproblematik ist daher auch aus dieser Sicht eine wichtige Aufgabe.

Zur Behandlung des Abwassers bzw. der feststofflichen Abfälle stehen gemäß dem Stand der Technik prinzipiell eine Entsorgung, entweder über direkte Entsorgung oder über Verdampfung, oder eine Behandlung mittels biologischer oder physikalisch-chemischer Verfahren zur Verfügung. Eine direkte Entsorgung kann etwa über Verwendung des Abwassers als Dünger erfolgen, was aber zu Beeinträchtigungen des Grundwassers sowie zu Geruchsbelästigungen führen kann. Des weiteren erfolgt der biologische Abbau der Inhaltsstoffe nur langsam, was besonders hinsichtlich der enthaltenen Bitterstoffe ein Problem darstellt. Eine direkte Entsorgung in den Vorfluter bzw. in das Meer ist ökologisch bedenklich und daher bereits jetzt weitestgehend verboten. Die bei der Olivenölproduktion anfallenden Abwässer bzw. feststofflichen Abfälle sind außerdem wegen ihres geringen Cystein-Proteingehalts und ihres hohen Zelluloseanteils auch als Futtermittel nicht geeignet. Eine Entsorgung in üblichen Kläranlagen ist wiederum aufgrund der hohen Konzentration an Organika sowie an Hemmstoffen, die den biologischen Abbau verzögern, schwierig. Die derzeit verbreitete Entsorgungsvariante der natürlichen Eindampfung mithilfe von Lagunen erfordert wiederum einen großen Flächenbedarf und führt zu den bereits erwähnten Risiken der Grundwassergefährdung, sowie zu Geruchsbelästigungen. Eine thermische Behandlung erfodert hohen Energiebedarf und hohe Investitions- und Betriebskosten.

Hinsichtlich einer Behandlung mittels biologischer Verfahren stellt die jahreszeitlich stark schwankende Menge an zu behandelndem Abwasser eine große Schwierigkeit dar. Der von der Olivenernte abhängige Saisonbetrieb würde eine diskontinuierliche Prozessführung der biologischen Verfahren erfordern, was insbesondere bei anaeroben/aeroben Verfahren schwierig ist. Hinsichtlich physikalisch-chemischer Verfahren steht zwar eine Vielzahl an Methoden zur Verfügung, deren Anwendung ist aber aufgrund der örtlichen stark dezentralisierten Verteilung der anfallenden Abwassermengen schwierig. Bei den Betrieben zur Olivenölproduktion handelt es sich zumeist um kleine bis mittelgroße Betriebe in örtlich mitunter großen Entfernungen. Zentrale Abwasserreinigungsanlagen sind daher zumeist ökonomisch nicht sinnvoll.

Es ist daher das Ziel der Erfindung, ein Verfahren zur Behandlung von Abwasser aus Betrieben zur Olivenölproduktion, das neben feststofflichen Abfällen im Zuge der Olivenverarbeitung anfällt, zu schaffen, das kostengünstig und in verhältnismäßig kleinen Baueinheiten zu verwirklichen ist. Dabei soll es eine Reinheit des behandelten Abwassers sicherstellen, die die Erfüllung entsprechender Umweltstandards erlaubt. Das Verfahren soll auch in technisch möglichst einfacher Weise zu verwirklichen sein, um eine leichte Adaption an unterschiedliche Abwassermengen zu erlauben. Somit kann leicht auf unterschiedliche Betriebsgrößen Rücksicht genommen werden. Das Verfahren bzw. die Vorrichtung zur Durchführung des Verfahrens sollte idealerweise auch zumindest teilweise in einer mobilen baulichen Einheit zu verwirklichen sein, insbesondere hinsichtlich der kostenintensiveren Einrichtungen, um sie mehreren Olivenölproduzenten bei jeweiligem Bedarf zur Verfügung zu stellen. Somit ersparen sich einerseits die einzelnen Betriebe Investitions- und Wartungskosten für die Abwasserreinigungsanlage, andererseits steht aber auch das gereinigte Abwasser dem jeweiligen Betrieb wieder zur Wiederverwendung zur Verfügung, was insbesondere in den für Olivenölproduzenten typischen, trockenen Gebieten einen großen Vorteil darstellt.

Diese Ziele werden durch die Merkmale von Anspruch 1 bzw. Anspruch 8 erfüllt. Anspruch 1 bezieht sich auf ein Verfahren zur Behandlung von Abwasser aus Betrieben zur Olivenölproduktion, das neben feststofflichen Abfällen im Zuge der Olivenverarbeitung anfällt, wobei erfindungsgemäß vorgesehen ist, dass das Abwasser in einem ersten Schritt durch eine Flockung vorgereinigt wird, und das vorgereinigte Abwasser in einem weiteren Schritt durch Filterung endgereinigt wird, wobei die Filterung durch eine Abfolge aus Nanofiltrationselementen und Umkehrosmoseelementen erfolgt. Es hat sich nämlich gezeigt, dass für typische Abwasser aus der Olivenölproduktion die Durchführung einer Flockung hinsichtlich einer Vorreinigung überraschend wirkungsvoll ist, sodass als Endreinigung eine Filterung eingesetzt werden kann. Die Flockung kann unter Benutzung bereits bestehender Lagunenabschnitte, oder in separaten Becken erfolgen. Dabei ist es denkbar, Teile der Anlage zur Durchführung des erfindungsgemäßen Verfahrens, etwa die Filtereinheiten, als mobile Anlagen auszuführen, die somit mehreren Betrieben jeweils temporär zur Verfügung gestellt werden können. Die Filterung erfolgt dabei erfindungsgemäß durch eine Abfolge aus Nanofiltrationselementen und Umkehrosmoseelementen.

Als besonders geeignetes Flockungsmittel zur Behandlung von Abwässern aus der Olivenölproduktion hat sich gemäß Anspruch 2 Kalziumhydroxid erwiesen, wobei die Wirkungsmechanismen noch nicht gänzlich geklärt sind. Kalziumhydroxid dürfte jedoch an Mechanismen der Peptidinteraktion beteiligt sein, die zur Modifikation von Proteinen führen. Des weiteren begünstigt die durch Kalziumhydroxid verursachte Erhöhung des pH-Werts die Verseifung von Ölanteilen, sodass in Folge organische Inhaltsstoffe und eingetragene Feststoffe sedimentierbar gemacht werden. Vorzugsweise wird dabei Kalziumhydroxid als Suspension in Wasser verwendet, die auch als Kalkhydrat oder Kalkmilch bezeichnet wird.

Gemäß Anspruch 3 kann vorgesehen sein, dass das vorgereinigte Abwasser zur Zwischenreinigung einem Mehrschichtfilter zugeführt wird, und das zwischengereinigte Abwasser der Abfolge aus Nanofiltrationselementen und Umkehrosmoseelementen zugeführt wird. Dadurch wird im Bedarfsfall eine Entlastung der nachfolgenden Nanofiltrations- und Umkehrosmoseelemente bewirkt.

Um die Filterung zu optimieren und die Filter zu schonen, kann gemäß Anspruch 4 vorgesehen sein, dass dem vorgereinigten Abwasser zur pH-Regulation eine Säure, vorzugsweise Salzsäure, beigemengt wird. Das vorgereinigte Abwasser weist nämlich nach der Flockung zumeist einen basischen pH-Wert auf, sodass eine Beigabe einer Säure angezeigt sein kann, um einen für den Betrieb der nachfolgenden Filter optimalen pH-Bereich einzustellen. Insbesondere wird bei neutralem pH-Wert das Potenzial zur Ausfällung von Kalk an den Membranen reduziert. Zudem ermöglicht die Beigabe einer Säure das Brechen der Öl/Wasser-Emulsion und trägt zur Reduktion der Trübung des Abwassers bei.

Anspruch 5 sieht vor, dass das Konzentrat der Umkehrosmoseelemente zumindest teilweise in das vor- oder zwischengereinigte Abwasser rückgeführt wird. Gemäß Anspruch 6 wird das Konzentrat der Nanofiltrationselemente zumindest teilweise in das unbehandelte Abwasser rückgeführt. Alternativ oder ergänzend kann gemäß Anspruch 7 aber auch vorgesehen sein, dass das Konzentrat der Nanofiltrationselemente zumindest teilweise den feststofflichen Abfällen zugeführt wird. Dadurch wird einerseits erreicht, dass durch das Ausschleusen eines Wasseranteils aus dem an und für sich geschlossenen Aufbereitungsprozess eine unerwünscht hohe Aufkonzentrierung der gelösten Salze und Organika vermieden wird, und andererseits eine Erhöhung des Feuchtegehalts der feststofflichen Abfälle erreicht, was etwa im Fall einer Kompostierung durchaus erwünscht ist.

Anspruch 8 bezieht sich schließlich auf eine Vorrichtung zur Behandlung von Abwasser aus Betrieben zur Olivenölproduktion, das neben feststofflichen Abfällen im Zuge der Olivenverarbeitung anfällt, wobei erfindungsgemäß vorgesehen ist, dass es einen Absetzer zur Flockung von Abwasser, sowie eine Abfolge von Nanofiltrationselementen und Umkehrosmoseelementen umfasst.

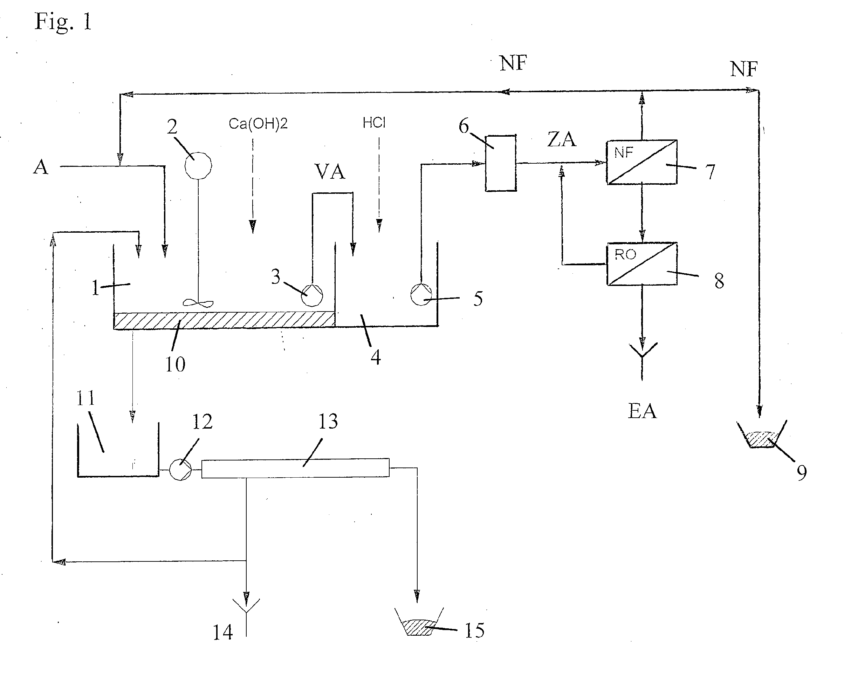

Die Erfindung wird im folgenden anhand der beiliegenden Fig. 1 näher erläutert, die ein Fließschema einer Ausführungsform des erfindungsgemäßen Verfahrens bzw. der erfindungsgemäßen Vorrichtung zeigt.

Wie in der Fig. 1 dargestellt ist, wird Abwasser A zunächst dem Absetzer 1 zugeführt. Abwasser aus der Olivenölproduktion weist die in der Tabelle 1 angegebenen typischen Analysewerte auf, wobei besonders die hohen CSB- und BSB₅-Werte, sowie der hohe Anteil gelöster Feststoffe auffallen. Bemerkenswert ist auch der hohe Gehalt an Kalium, Kalzium, Natrium und Magnesium, sowie der Sulfat- und Phosphat-Ionen. Den in der Tabelle 1 angegebenen Werten stehen die erforderlichen Ablaufwerte für die Einleitung in den Vorfluter (Italien, Griechenland) bzw. in das Meer gegenüber, wie sie in der Tabelle 2 angegeben sind. Ein Vergleich der Tabellen 1 und 2 zeigt, dass die Behandlung des Abwassers insbesondere auf eine Reduktion der CSB- und BSB₅-Werte, sowie der gelösten Feststoffe abzielen muss. Erfindungsgemäß wird dies im wesentlichen durch eine Kombination aus Flockung und Filtration erreicht, wie im folgenden erläutert wird.

**Tabelle 1: Typische Analysewerte von OMWW**

| *Analysenwert* | *mg*/*l* |
|---|---|
| Zucker | 20-80 |
| N-Substanzen | 12-24 |
| Organische Säuren | 5-15 |
| Polyalkohole | 5-15 |
| Polyphenole | 3-8 |
| Restöl | 3-5 |
| Na⁺ | 280 |
| K⁺ | 6.200 |
| Ca⁺⁺ | 510 |
| Mg⁺⁺ | 120 |
| Fe⁺⁺⁺ | 170 |
| Cl⁻ | 470 |
| SO₄⁻⁻ | 370 |
| PO₄⁻⁻⁻⁻ | 1050 |
| pH [-] | 4,9-5,8 |
| CSB | 40.000 - 160.000 |
| BSB₅ | 15.000 - 60.000 |
| Gelöste Feststoffe | 5.000 - 10.000 |
| Leitfähigkeit [µS/cm] | 10.000 - 20.000 |

**Tabelle 2: Erforderliche Ablaufwerte**

| | **Vorfluter** | **Meer** |
|---|---|---|
| pH | 5,5-9,5 | 6-9 |
| BSB₅ [mg/l] | < 40 | < 40 |
| CSB [mg/l] | < 160 | < 120 |
| Feststoffe [mg/l] | < 80 | < 50 |
| Gelöste Stoffe [mg/l] | < 1.000 | - |

Im Absetzer 1 findet unter Beigabe von Kalkmilch, also Kalziumhydroxid (Ca(OH)₂) in wässriger Suspension, Flockung statt. Die Agglomeration der organischen Inhaltsstoffe und der eingetragenen Feststoffe wird dabei durch vorsichtige Agitation mithilfe des Rührers 2 unterstützt. Wie bereits erwähnt wurde, dürfte Kalziumhydroxid an Mechanismen der Peptidinteraktion beteiligt sein, die zur Modifikation von Proteinen führen. Des weiteren wird durch die Beigabe von Kalziumhydroxid der pH-Wert des Abwassers im Absetzer 1 angehoben, wodurch Verseifung von Ölanteilen gefördert wird. Die Ölanteile stellen ein Gemenge von Glycerin-Carbonsäureestern dar, insbesondere Triester des Glycerins. Unter Wassereinfluss lassen sich Ester wieder in ihre Säure- und Alkoholkomponenten zerlegen (Verseifung). Bei basischen pH-Werten findet eine nicht-reversible Esterhydrolyse statt, sodass sich Ester im alkalischen Medium quantitativ spalten lassen. Durch Zugabe von Kaliumhydroxid und der damit verbundenen Anhebung des pH-Werts scheint die Esterhydrolyse begünstigt zu werden.

Die ausgefällten und ausgeflockten Inhaltsstoffe setzen sich als Schlamm 10 am Boden des Absetzers 1 ab, wodurch eine Reduktion des Gehaltes an organischen Inhaltsstoffen im Abwasser 1 erreicht wird, so kann etwa der CSB um 45-47% reduziert werden. Der abgesetzte Schlamm 10 weist einen pH-Wert von 10 - 11 auf, während die überstehende Lösung, die in weiterer Folge als vorgereinigtes Abwasser VA bezeichnet wird, durch biologische Abbauprozesse und Bildung von CO₂ auf pH-Werte von 7 - 8 abfällt. Eine weitere geringe Zugabe von Kalkmilch erzeugt eine restliche Klärung bis zu einer Trübung von ca. 200 NTU (Nephelometric Turbidity Unit).

Über Pumpen 3 wird das vorgereinigte Abwasser VA einem Zwischenbehälter 4 zugeführt, wo die Beimengung von Säure erfolgen kann, etwa von Salzsäure. Eine Konditionierung mit Säure auf pH 7 ermöglicht das Brechen der Öl/Wasser-Emulsion und reduziert die Trübung weiter. Zugleich wird das Potential zur Ausfällung von Kalk an den Membranen der nachfolgenden Filterstufen reduziert.

Das so vorgereinigte Abwasser VA wird mithilfe von Pumpen 5 über Mehrschichtfilter 6 geleitet, um restliche Feststoffe abzuscheiden. Das den Mehrschichtfilter 6 verlassende Abwasser wird im folgenden auch als zwischengereinigtes Abwasser ZA bezeichnet. Dieses zwischengereinigte Abwasser ZA gelangt nunmehr nach Passieren eines 10 µm-Feinfilters in eine zweistufige Membrananlage bestehend aus Nanofiltrationselementen 7 und Umkehrosmoseelementen 8.

In der ersten Stufe werden spezielle Nanofiltrationselemente 7 in Kaskadenschaltung angewendet, um mehrfach geladene Ionen wie Sulfat, Phosphat, Kalzium und Magnesium abzutrennen, hauptsächlich jedoch um Organika mit einem nominellen cutoff ab 150 - 300 möglichst quantitativ zu entfernen. Diese abgetrennten Inhaltsstoffe werden mit dem Konzentratanfall NF in einem Teilstrom dem unbehandelten Abwasser A rückgeführt. Ein anderer Teilstrom des Nanofiltrationskonzentrats NF gelangt zur Befeuchtung des Kompostfeststoffes 9, welcher aus dem Dekantierprozess der ölhaltigen Maische entsteht. Das Permeat aus der Nanofiltrationsstufe 7 wird in einer Ausbeute von ca. 75 % einem weiteren Reinigungsschritt unterzogen, wobei Umkehrosmose-Membranen mit einem Salzrückhalt von > 99 % zur Anwendung kommen. Das Umkehrosmose-Permeat in einer Ausbeute von ca. 90 % entspricht den Einleitungsbedingungen in den Vorfluter, und kann auch im Waschprozess zur Olivenreinigung wieder verwendet werden. Das Umkehrosmose-Permeat wird im folgenden auch als endgereingtes Abwasser EA bezeichnet.

Das Konzentrat RO der Umkehrosmoseelemente 8 wird in den Zulauf zu den Nanofiltrationselementen 7 zurückgeführt, und somit dem zwischengereinigten Abwasser ZA beigemengt. Es kann aber auch dazu verwendet werden, um aus der aufkonzentrierten Lösung pharmazeutische Wertstoffe zu gewinnen, etwa Polyphenole und Flavonoide wie Hydroxytyrosol (Antioxidantien, Radikalfänger), Oleoropein (Bitterstoff) oder Mannitol (Süßstoff als Additiv in der Diabetestherapie).

Der im Absetzer 1 gebildete Schlamm 10 wird einem Schlammbehälter 11 zugeführt, von wo er bevorzugt über Pumpen 12 in eine nachfolgende Schlammbehandlungsstufe 13 transportiert werden kann. Hier wird dem Schlamm 10 Feuchtigkeit entzogen, wobei extrahiertes Wasser W wieder dem Absetzer 1 zugeführt wird. Das dem Reinigungsprozess entnommene Presswasser 14 kann zu Kompostierzwecken verwendet werden, und verbleibende Feststoffe werden als Trockenschlamm 15 abgeführt.

Damit wird ein fast geschlossener Kreislauf des Wassers wie auch des Austrages von Feststoffen erreicht. Lediglich ein geringer Anteil des Wassers wird ausgeschleust, um eine unerwünscht hohe Aufkonzentrierung der gelösten Salze und Organika zu vermeiden: Dies erfolgt einerseits mit dem abgesetzten und weiterbehandelten Schlamm 10 aus der Vorreinigung, etwa mittels Filterpressen, Zentrifugen oder anderen Methoden, welche einen Feuchtanteil von etwa 50 % erzielen, andererseits - wie oben beschrieben - durch die Abtrennung eines Teilstromes des Nanofiltrations-Konzentrates NF und dessen Beimengung zum Filterkuchen 9 aus der Ölproduktion. Letzterer weist bei modernen Dekantern einen Feuchtegehalt von ca. 40 % auf und wird auf etwa 50 % erhöht, welcher für die Weiterverarbeitung zulässig, oder wie bei der Kompostierung sogar erwünscht ist.

Eine Modellrechnung unter Annahme einer anfallenden Menge an Abwasser A von 9.2 m³/h, einem Volumen des Absetzers 1 von 400 m³ und einem Volumen des Zwischenbehälters von 10 m³ ergibt eine Menge von 8.0 m³/h endgereingtes Abwasser EA. Dabei wurde von einer Entnahme von 11.0 m³/h vorgereinigtes Abwasser VA aus dem Zwischenbehälter 4 ausgegangen, das in weiterer Folge dem Mehrschichtfilter 6 und den Nanofiltrationselementen 7 zugeleitet wird. Das anfallende Nanofiltrations-Konzentrat NF von 3.0 m³/h wird zu einem Anteil von 1.0-2.0 m³/h dem unbehandelten Abwasser A zugeführt, und zu einem Anteil von 2.0-1.0 m³/h den feststofflichen Abfällen 9 aus dem Dekanter. Das Permeat der Nanofiltrationselemente 7 gelangt in einer Menge von 8.9 m³/h in die Umkehrosmose-Stufe, wobei das hier anfallende Konzentrat RO von 0.9 m³/h in das zwischengereinigte Abwasser ZA rückgeführt wird. Die hieraus resultierende Menge von 8.0 m³/h Umkehrosmose-Permeat stellt das endgereinigte Abwasser EA dar. Bei der Flockung fallen gemäß der Modellrechnung 1.1-2.2 m³/h Schlamm 10 an, die dem Schlammbehälter 11 mit einem angenommenen Volumen von 20 m³ zugeführt werden. Aus der Schlammbehandlungsstufe 13 resultieren schließlich 0.9-2.0 m³/h Presswasser 14, welches zu Kompostierzwecken verwendet werden kann, und 0.2 m³/h Trockenschlamm 15.

Somit gelingt mithilfe der Erfindung die Behandlung von Abwasser aus Betrieben zur Olivenölproduktion mithilfe eines Verfahrens, das kostengünstig und in verhältnismäßig kleinen Baueinheiten zu verwirklichen ist. Dabei kann eine Reinheit des behandelten Abwassers erzielt werden, die die Erfüllung entsprechender Umweltstandards erlaubt. Das Verfahren ist darüber hinaus auch in technisch einfacher Weise zu verwirklichen, und erlaubt eine leichte Adaption an unterschiedliche Abwassermengen. Somit kann es leicht auf unterschiedliche Betriebsgrößen Rücksicht abgestimmt werden. Die Vorrichtung zur Durchführung des Verfahrens kann teilweise auch in einer mobilen baulichen Einheit verwirklicht werden, etwa hinsichtlich der Filteranlagen. Letztere können daher auch mehreren Olivenölproduzenten bei jeweiligem Bedarf zur Verfügung gestellt werden. Somit ersparen sich einerseits die einzelnen Betriebe die Investitions- und Wartungskosten der Abwasserreinigungsanlage, andererseits steht aber auch das gereinigte Abwasser dem jeweiligen Betrieb wieder zur Wiederverwendung zur Verfügung, was insbesondere in den für Olivenölproduzenten typischen, trockenen Gebieten einen großen Vorteil darstellt.

## Patentansprüche

1. Verfahren zur Behandlung von Abwasser (A) aus Betrieben zur Olivenölproduktion, das neben feststofflichen Abfällen (9) im Zuge der Olivenverarbeitung anfällt, **dadurch gekennzeichnet, dass** das Abwasser (A) in einem ersten Schritt durch eine Flockung vorgereinigt wird, und das vorgereinigte Abwasser (VA) in einem weiteren Schritt durch Filterung endgereinigt wird, wobei die Filterung durch eine Abfolge aus Nanofiltrationselementen (7) und Umkehrosmoseelementen (8) erfolgt.

2. Verfahren nach Anspruch 1, **dadurch gekennzeichnet, dass** die Flockung durch Beimengung von Kalziumhydroxid als Flockungsmittel erfolgt.

3. Verfahren nach Anspruch 1 oder 2, **dadurch gekennzeichnet, dass** das vorgereinigte Abwasser (VA) zur Zwischenreinigung einem Mehrschichtfilter (6) zugeführt wird, und das zwischengereinigte Abwasser (ZA) der Abfolge aus Nanofiltrationselementen (7) und Umkehrosmoseelementen (8) zugeführt wird.

4. Verfahren nach einem der Ansprüche 1 bis 3, **dadurch gekennzeichnet, dass** dem vorgereinigten Abwasser (VA) zur pH-Regulation eine Säure, vorzugsweise Salzsäure, beigemengt wird.

5. Verfahren nach einem der Ansprüche 1 bis 4, **dadurch gekennzeichnet, dass** das Konzentrat (RO) der Umkehrosmoseelemente (8) zumindest teilweise in das vor- oder zwischengereinigte Abwasser (VA,ZA) rückgeführt wird.

6. Verfahren nach einem der Ansprüche 1 bis 5, **dadurch gekennzeichnet, dass** das Konzentrat (NF) der Nanofiltrationselemente (7) zumindest teilweise in das unbehandelte Abwasser (A) rückgeführt wird.

7. Verfahren nach einem der Ansprüche 1 bis 6, **dadurch gekennzeichnet, dass** das Konzentrat (NF) der Nanofiltrationselemente (7) zumindest teilweise den feststofflichen Abfällen (9) zugeführt wird.

8. Vorrichtung zur Behandlung von Abwasser (A) aus Betrieben zur Olivenölproduktion, das neben feststofflichen Abfällen (9) im Zuge der Olivenverarbeitung anfällt, **dadurch gekennzeichnet, dass** es einen Absetzer (1) zur Flockung von Abwasser (A), sowie eine Abfolge von Nanofiltrationselementen (7) und Umkehrosmoseelementen (8) umfasst.
